# EUROPÄISCHE PATENTANMELDUNG

(11) **EP 3 282 410 A1**
(43) Veröffentlichungstag der Anmeldung: **14.02.2018**
(21) Anmeldenummer: 16183527.7
(22) Anmeldetag: 10.08.2016
(51) Int. Cl.: G06Q 10/08

(54) **LAGERSYSTEM UND VERFAHREN ZUM BETREIBEN EINES LAGERSYSTEMS**

(71) Anmelder: Bayer Aktiengesellschaft, 51373 Leverkusen (DE)
(72) Erfinder: Kenfenheuer, Josef, 51467 Bergisch Gladbach (DE)
(74) Vertreter: BIP Patents

(57) **Zusammenfassung**

Die Erfindung betrifft ein Lagersystem (100, 200) umfassend mindestens ein Lager (101, 201) eingerichtet zum Lagern von Produkten (108.1, 108.2, 108.3, 108.4, 208), wobei das Lager (101, 201) mindestens einen Lagerplatz (104.1, 104.2, 104.3, 104.4, 204) eingerichtet zum Lagern von mindestens einem Produkt (108.1, 108.2, 108.3, 108.4, 208) umfasst, mindestens eine dem Lagerplatz (104.1, 104.2, 104.3, 104.4, 204) zugeordnete Erfassungseinrichtung (106.1, 106.2, 106.3, 106.4, 206), wobei die Erfassungseinrichtung (106.1, 106.2, 106.3, 106.4, 206) eingerichtet ist zum Erfassen der Anzahl von in dem Lagerplatz (104.1, 104.2, 104.3, 104.4, 204) angeordneten Produkten (108.1, 108.2, 108.3, 108.4, 208) durch Detektieren der Anzahl von an den Produkten (108.1, 108.2, 108.3, 108.4, 208) angeordneten Identifikationskennungen (110, 210) der in dem Lagerplatz (104.1, 104.2, 104.3, 104.4, 204) angeordneten Produkte (108.1, 108.2, 108.3, 108.4, 208), wobei die Erfassungseinrichtung (106.1, 106.2, 106.3, 106.4, 206) eingerichtet, die erfasste Anzahl der Produkte (108.1, 108.2, 108.3, 108.4, 208) über mindestens ein Kommunikationsnetz (105, 112, 205) an mindestens einen Server (114, 214) zu übertragen, und wobei der Server (114, 214) zur Weiterleitung der empfangenen Anzahl der Produkte (108.1, 108.2, 108.3, 108.4, 208) an einer oder mehrere Vorrichtungen zur Anzeige der empfangenen Anzahl der Produkte (108.1, 108.2, 108.3, 108.4, 208) eingerichtet ist.

## Beschreibung

Die Erfindung betrifft ein Lagersystem umfassend mindestens ein Lager eingerichtet zum Lagern von Produkten und ein Verfahren zum Betreiben eines Lagersystems.

Waren oder Produkte werden vor ihrer Nutzung bzw. Verbrauch in einem oder mehreren Lagern gespeichert. Ein Lager ist insbesondere ein Raum, ein Gebäude und/oder ein Areal, in dem Waren bzw. Produkte aufbewahrt bzw. gelagert werden können. In der Regel umfasst ein Lager eine Mehrzahl von Lagerplätzen. In bzw. an einem Lagerplatz kann mindestens ein erstes Produkt, vorzugsweise eine Vielzahl von ersten Produkten, gelagert werden.

Im Stand der Technik ist es üblich, Ein- und/oder Auslagerungen in einem Lager manuell über ein separates IT System zu erfassen und zu verwalten. Wird beispielsweise ein erstes Produkt aus dem Lagerplatz des ersten Produkts entnommen, so wird die Auslagerung separat und manuell in das IT-System eingeben. Entsprechendes kann bei der Einlagerung von mindestens einem ersten Produkt erfolgen.

Problematisch an diesem Verfahren ist, dass regelmäßig Differenzen zwischen dem in dem IT-System gespeicherten Bestand von mindestens einem Produkt und dem tatsächlichen physikalischen Bestand von diesem Produkts auftreten. Beispielhafte Gründe hierfür sind, dass tatsächliche Ein- und/oder Auslagerungen von einem Produkt nicht oder in falscher Weise manuell in das IT-System übertragen werden und/oder ein Produkt in den falschen Lagerplatz eingelagert wird.

Daher liegt der vorliegenden Erfindung die Aufgabe zugrunde, ein Lagersystem und ein Verfahren zum Betreiben von mindestens einem Lagersystem bereitzustellen, bei dem in einfacher Weise zumindest Differenzen zwischen einem in einem Server gespeicherten Lagerbestand eines Produkts und dem tatsächlichen Lagerbestand entfallen, insbesondere Lösungen bereitzustellen, die kein bisher übliches IT-System zur Lagerbestandsverwaltung und Bestandsführung benötigt.

Die zuvor hergeleitete und aufgezeigte Aufgabe wird gemäß einem ersten Aspekt der Erfindung bei einem Lagersystem gemäß dem Patentanspruch 1 gelöst. Das Lagersystem umfasst mindestens ein Lager eingerichtet zum Lagern von Produkten. Das Lager umfasst mindestens einen Lagerplatz eingerichtet zum Lagern von mindestens einem Produkt. Das Lagersystem umfasst mindestens eine dem Lagerplatz zugeordnete Erfassungseinrichtung. Die Erfassungseinrichtung ist eingerichtet zum Detektieren der an den Produkten angeordneten Identifikationskennungen der in dem Lagerplatz angeordneten Produkte. Darüber hinaus ist die Erfassungseinrichtung konfiguriert, um mindestens die Anzahl der detektierten Identifikationskennungen und somit die Anzahl der im Lagerplatz angeordneten Produkten in Echtzeit zu ermitteln. Vorzugsweise ist die Erfassungseinrichtung in der Lage auch weitere in der Identifikationskennung gespeicherte Daten in Echtzeit abzurufen. Die Erfassungseinrichtung ist zum Übertragen der erfassten Anzahl der Produkte über mindestens ein Kommunikationsnetz an mindestens einen zentralen Server eingerichtet. So kann der durch die Erfassungseinrichtung abgerufene Lagerbestand an den zentralen Server übertragen. Der Server ist typischerweise derart eingerichtet, dass er den abgerufene Lagerbestand an einem Bildschirm zur Anzeige und / oder an mindestens ein Computer oder ein mobile Device über mindestens ein Kommunikationsnetz weiterleiten kann.

Das Lagersystem umfasst mindestens ein Lager zum Lagern von Produkten. Beispielhafte und nicht abschließende Lagerarten sind Regallager, wie Hochregallager, Kühllager, Freilager, Palettenlager, Blocklager und dergleichen. Unter einen Produkt bzw. einer Ware ist grundsätzlich jeder lagerfähiger Gegenstand zu verstehen.

Ein Lager umfasst mindestens einen Lagerplatz. Vorzugsweise umfasst ein Lager eine Mehrzahl von Lagerplätzen. Ein Lagerplatz ist insbesondere ein abgegrenzter oder zumindest abgrenzbare Raum mit definierten Abmessungen. Der Lagerplatz ist insbesondere eingerichtet, mindestens ein Produkt aufzunehmen. Vorzugsweise können mehrere Produkte in bzw. an einem Lagerplatz gelagert werden. Beispielsweise kann ein Lagerplatz ein Regalfach, ein Lagerblock oder dergleichen sein.

Dem mindestens einen Lagerplatz kann mindestens eine Erfassungseinrichtung zugeordnet sein. Vorzugsweise kann zumindest jedem Lagerplatz eine Erfassungseinrichtung zugeordnet sein. Hierdurch kann sichergestellt werden, dass sämtliche Lagerplätze durch eine oder mehrere Erfassungseinrichtungen überwacht werden können. Vorzugsweise kann einem Lagerplatz stets mindestens eine separate Erfassungseinrichtung zugeordnet sein. Mit anderen Worten kann jeder Lagerplatz mit einer eigenen Erfassungseinrichtung ausgestattet sein.

Abhängig von dem Lagerplatz, wie dessen Form, Größe, etc., und/oder der Art der gelagerten Produkte und/oder der eingesetzten Erfassungseinrichtung, können auch mehr als eine Erfassungseinrichtung für einen Lagerplatz vorgesehen sein. Ferner können auch Lagerplätze gruppiert und der Gruppe von Lagerplätzen nur eine Erfassungseinrichtung zugeordnet sein.

Die Erfassungseinrichtung ist eingerichtet, mindestens die Anzahl der in oder an dem Lagerplatz gelagerten Produkte zu erfassen. Zur Erfassung der Anzahl der Produkte sind (nahezu) sämtliche in dem Lager zu lagernden Produkte, mit einer Identifikationskennung ausgestattet. Eine Identifikationskennung kann an oder in dem Produkt angeordnet sein. Beispielsweise kann eine Identifikationskennung an einer Außenseite eines Produkts (sichtbar für die Erfassungseinrichtung) angeordnet sein. Sichtbar kann bedeuten, dass die Erfassungseinrichtung die Identifikationskennung visuell und/oder durch ein elektromagnetisches Feld erfassen kann. Bevorzugt wird jedes für den Lagenbestand relevante Produkt stets mit einer Identifikationskennung ausgestattet sein.

Die Erfassungseinrichtung ist eingerichtet, zumindest die in oder an dem Lagerplatz befindlichen Identifikationskennungen zu erfassen. Anhand der erfassten Identifikationskennungen kann auf die Anzahl der Produkte in dem Lagerplatz geschlossen werden. Beispielsweise ist die Anzahl an erfassten Identifikationskennungen gleich der Anzahl an Produkten.

Ferner ist die mindestens eine Erfassungseinrichtung mit einem Kommunikationsnetz verbunden. Bei dem Kommunikationsnetz kann es sich um ein drahtloses und/oder drahtgebundenes Kommunikationsnetz handeln. Die Erfassungseinrichtung kann zumindest die erfasste Anzahl an Produkten in dem der Erfassungseinrichtung zugeordneten Lagerplatz an einen Server übertragen.

Der Server, der entfernt angeordnet sein kann, kann über das Kommunikationsnetz oder mindestens einem weiteren Kommunikationsnetz mit einer Mehrzahl von Erfassungseinrichtungen kommunizieren. Beispielsweise kann die Erfassungseinrichtung nach Empfang einer Anfragenachricht von dem Server als Antwort hierauf zumindest die Anzahl der derzeit in dem Lagerplatz gespeicherten Produkte übertragen. Alternativ oder zusätzlich kann eine Erfassungseinrichtung zu bestimmbaren oder bestimmten Zeitpunkten und/oder bei Detektion einer Änderung der Anzahl der Produkte eine entsprechende Information an den zentralen Server übertragen.

Der Server ist eingerichtet, zumindest die Anzahl der Produkte in einem Lagerplatz zu empfangen. Mit dem Lagersystem wird den physikalischen Bestand jederzeit wiederholbar direkt am Lagerplatz durch die Erfassungseinrichtung ermittelt.

Optional speichert der Server die Historie über die Ein- und Auslagerungszeitpunkt eines Produkts in oder aus einem Lagerplatz, die bei Bedarf abrufbar ist. Dazu müssen die dem Lagerplatz zugeordneten Identifikationseinrichtungen selbst aktiv in der Lage sein, einen Zu- oder Abgang eines Produkts auf ihrem zugeordneten Lagerplatz an den Server zu melden. Diese Historie ist z. B. für die Optimierung des Lagerbestands anwendbar.

Der Server ist derart konfiguriert, dass der die von den Erfassungseinrichtungen empfangenen Daten an eine Vorrichtung zur Anzeige - einen Bildschirm, einen mit dem Server verbindbaren Arbeitsplatzrechner, einem mit dem Server verbindbaren mobilen Gerät und/oder dergleichen - weiterleitet. Auch kann die Anzahl der Produkte von mindestens einem Lagerplatz beispielsweise von einem mit dem Server verbindbaren Arbeitsplatzrechner, einem mit dem Server verbindbaren mobilen Gerät und/oder dergleichen abgerufen werden. Alternativ kann eine Vorrichtung zum Abrufen der Daten in dem Server implementiert sein. Vorzugsweise ist mindestens die Anzahl an Produkten auf einem Bildschirm des mobilen Geräts, des Servers oder des Arbeitsplatzrechners anzeigbar.

Durch eine Übertragung der Lagerbestandsdaten an den Server derart, dass sie beispielsweise an einem mit dem Server verbundenen Arbeitsplatzrechner abgerufen werden können, kann in einfacher Weise der aktuelle (tatsächliche) Lagerbestand bei Bedarf auch dort angezeigt werden. Besonders bevorzugt kann von einem Arbeitsplatzrechner über die Vorrichtung zum Abrufen der Daten im Server einen Erfassungsbefehl erteilt werden. So kann der Inventuraufwand signifikant reduziert werden. Vorzugsweise sind der Server und / oder die mit dem Server verbundenen Arbeitsplatzrechner sowie mobilen Geräten für die Erkennung und Analyse der Anzahl der Produkte und deren produktspezifischen Information konfiguriert.

Es versteht sich, dass auch der Fall eingeschlossen ist, dass keine Identifikationskennung erfasst worden ist, also die Anzahl der Produkte in dem Lagerplatz derzeit null ist.

Besonders geeignet sind passive Identifizierungskennungen, wie ein Barcode, ein passiver RFID-Transponder oder ein passiver funkbasierter Beacon.

Gemäß einer ersten Ausführungsform des Lagersystems kann die Erfassungseinrichtung ausgewählt sein aus der Gruppe umfassend Barcodeleser, RFID-Lesegerät, funkbasierte Beacon-Lesegerät und Kamera. Entsprechend kann die Identifikationskennung ausgewählt sein aus der Gruppe umfassend Barcode, RFID-Transponder oder funkbasierter Beacon (auch nur Beacon genannt wie z. B. iBeacon®). Vorzugsweise kann das Lagersystem ein Funk-Nahfeld-Dektionssystem umfassen. Insbesondere können ein RFID-(radio-frequency identification) System umfassend RFID-Erfassungseinrichtungen und RFID Transponder alternativ ein Beacon-Lesegerät und Beacon implementiert sein. Eine zuverlässige Detektion von Produkten, die mit RFID-Transponder oder Beacon ausgestattet sind, kann sichergestellt werden.

Zusätzlich zu einer RFID bzw. Beacon-Erfassungseinrichtung kann vorzugsweise eine visuelle Erfassungseinrichtung vorgesehen sein. Für den Fall, dass ein Produkt ohne Identifikationskennung und/oder eine Identifikationskennung ohne Produkt, beispielsweise aufgrund einer Beschädigung des Produkts und/oder der Identifikationskennung, in einen Lagerplatz eingelagert wird, kann dies mittels einer weiteren visuellen Erfassungseinrichtung detektiert werden.

Darüber hinaus kann die Erfassungseinrichtung gemäß einer Ausführungsform eingerichtet sein, derart, dass ausschließlich die in dem der Erfassungseinrichtung zugeordneten Lagerplatz angeordneten Identifikationskennungen erfassbar sind. Beispielsweise kann ein Barcodescanner derart ausgerichtet sein, dass nur Gegenständen in dem Lagerplatz erfasst werden können. Mit anderen Worten ist das Erfassungsfeld des Barcodescanners bzw. -lesegeräts (nur) auf den Lagerplatz ausgerichtet. Bei einem RFID- oder Beacon-Lesegerät können die Sendemittel des Lesegeräts derart ausgebildet sein, dass nur die Ausmessungen des Lagerplatzes von dem Lesefeld erfasst werden. Insbesondere kann ein niederfrequentes Lesefeld ausgesendet werden.

Gemäß einer weiteren Ausführungsform kann der Lagerplatz mindestens eine mit der Erfassungseinrichtung über eine Kommunikationsverbindung verbindbare Anzeigeneinrichtung umfassen. Beispielsweise kann der mindestens eine Lagerplatz mit zumindest einem Bildschirm ausgestattet sein. Es versteht sich, dass eine Gruppe von Lagerplätzen mit einem gemeinsamen Bildschirm ausgestattet sein kann. Die Anzeigeneinrichtung kann zum Anzeigen der Anzahl der Produkte in dem Lagerplatz eingerichtet sein. Insbesondere kann die Erfassungseinrichtung die entsprechende Information der Anzeigeneinrichtung über eine Kommunikationsverbindung zur Verfügung stellen. Insbesondere bei einer Vielzahl an gelagerten Produkten erhält ein Benutzer vor Ort unmittelbar eine Information über die augenblicklich gelagerte Anzahl der Produkte in dem mindestens einen Lagerplatz. Vorzugsweise können weitere Produktdaten anzeigbar sein.

Die Erfassungseinrichtung kann gemäß einer Ausführungsform zur Versorgung mit elektrischer Energie mit einem elektrischen Energieversorgungsnetz verbindbar sein. Alternativ oder zusätzlich kann die Erfassungseinrichtung zur Versorgung mit elektrischer Energie mit einem zur Energieübertragung konfigurierten Kommunikationsnetz verbindbar sein. Beispielsweise kann Power over Ethernet vorgesehen sein. Ein (zusätzliches) Energieversorgungsnetz kann in diesem Fall entfallen. Gleichzeitig ist eine dauerhafte Energieversorgung der mindestens einen Erfassungseinrichtung sichergestellt.

Alternativ oder zusätzlich kann die Erfassungseinrichtung zur Versorgung mit elektrischer Energie über mindestens einen Energiespeicher, wie einer (wiederaufladbaren) Batterie, verfügen. Eine eigene Energieversorgung, wie eine Batterie, besitzt den Vorteil, dass eine Erfassungseinrichtung (nur) über ein drahtloses Kommunikationsnetz kommunizieren kann. Eine drahtgebundene Kommunikationsverbindung kann entfallen. Alternativ oder zusätzlich kann die Erfassungseinrichtung zur Versorgung mit elektrischer Energie mit einer Photovoltaikeinrichtung verbindbar sein. Insbesondere bei einem Freilager kann eine entsprechende Energieversorgung vorgesehen sein.

Grundsätzlich ist es denkbar, dass die Erfassungseinrichtung ständig aktiviert ist, um den Lagerbestand zu erfassen. In einer bevorzugten Ausführungsform des erfindungsgemäßen Lagersystems kann die Erfassungseinrichtung mindestens eine Aufweckeinheit eingerichtet zum Aktivieren der Erfassungseinrichtung umfassen. Eine Aufweckeinheit kann in der Erfassungseinrichtung integriert sein oder mit der Erfassungseinrichtung über eine Kommunikationsverbindung verbindbar sein. Die Aufweckeinheit ist insbesondere eingerichtet, basierend auf zumindest einem Aufweckereignis, wie einem empfangenen Aufwecksignal, die Erfassungseinrichtung zu aktivieren. Durch die Aktivierung kann vorzugsweise zumindest die (unmittelbare) Erfassung des Lagerbestands durch die mindestens eine Erfassungseinrichtung bewirkt werden. Nach der Erfassung des augenblicklichen Lagerbestands und insbesondere der Übertragung des Lagerbestands an den Server (und ggf. einer vorgebbaren Verzögerungszeitspanne) kann die Erfassungseinrichtung wieder in den Ruhemodus versetzt werden. Der Energieverbrauch des Lagersystems kann signifikant reduziert werden.

In einer Ausführungsform kann die Aufweckeinheit zum Aktivieren der Erfassungseinrichtung abhängig von einem Empfang eines Aufwecksignals von dem Server und/oder von der Anzeigeneinrichtung eingerichtet sein. Beispielsweise kann die Aufweckeinheit einen Kommunikationskanal zu bestimmten Zeitpunkten abhören. Empfängt die Aufweckeinheit ein insbesondere an die ihr zugeordnete Erfassungseinrichtung adressiertes Aufwecksignal, kann die Aufweckeinheit eine Aktivierung der Erfassungseinrichtung bewirken. Beispielsweise kann ein Benutzer über einen Arbeitsplatzrechner den Server veranlassen, ein Aufwecksignal auszusenden. Dann kann die aktivierte Erfassungseinrichtung die augenblickliche Anzahl von Produkte erfassen und an den Server senden. Der Arbeitsplatzrechner kann dann die aktualisierten Daten abrufen. Auch kann das Aufwecksignal von einer Anzeigeneinrichtung generiert werden. Beispielsweise kann die Anzeigeneinrichtung eine Betätigungseinheit, wie eine Taste, umfassen. Durch Drücken der Taste kann bewirkt werden, dass die Erfassungseinrichtung aktiviert wird und nach Übertragen des aktuellen Lagerbestands dieser auf dem Bildschirm der Anzeigeneinrichtung angezeigt wird. Die Erfassungseinrichtung wird bei dieser Ausführungsform (nur) dann aktiviert, wenn eine Anzeige des aktuellen Lagerbestands gewünscht ist.

Alternativ oder zusätzlich kann eine Aufweckeinheit zum Detektieren von zumindest einer potentiellen Änderung der Anzahl der Produkte des Lagerplatzes eingerichtet sein. Diese Aufweckeinheit kann zum Aktivieren der Erfassungseinrichtung bei Detektion einer potentiellen Änderung eingerichtet sein. Es kann gewünscht sein, dass vorzugsweise jede Änderung des Lagerbestands eines Lagerplatzes erfasst und vorzugsweise an den Server übertragen wird. Hierdurch kann sichergestellt werden, dass die in dem Server gespeicherten Daten stets mit dem tatsächlichen Lagerbestand übereinstimmen. Beispielsweise die Aufweckeinheit mindestens einen Bewegungssensor vorgesehen sein. Durch den Bewegungssensor kann eine Bewegung, insbesondere eine Ein- oder Auslagerung, detektiert werden. Potentiell bedeutet vorliegend, dass auch der Fall eintreten kann, dass zwar eine Bewegung oder dergleichen detektiert wird, jedoch tatsächlich keine Änderung des Lagerbestands erfolgt.

Alternativ oder zusätzlich kann eine Aufweckeinheit zum zeitgesteuerten Aktivieren der Erfassungseinrichtung eingerichtet sein. Beispielsweise kann die Erfassungseinrichtung pro Zeiteinheit (z.B. Minute, Stunde, Tag, Woche, etc.) für eine vorgebbare Anzahl an Zeitpunkten von der Aufweckeinheit aktiviert werden. Eine einfache Implementierung einer zeitgesteuerten Aufweckeinheit, beispielsweise mittels eines Timers, ist möglich. Es versteht sich, dass eine Erfassungseinrichtung mehr als eine Aufweckeinheit und/oder mindestens eine Aufweckeinheit, die auf zumindest zwei unterschiedliche Aufweckereignisse anspricht, umfassen kann.

Darüber hinaus kann bei einer weiteren Ausführungsform vorgesehen sein, dass die Erfassungseinrichtung zum Auslesen von mindestens einem Datenparameter des Produkts eingerichtet ist. Der Datenparameter kann ausgewählt sein aus der Gruppe umfassend Produktkennung, Produktbezeichnung, Produktmenge, Haltbarkeit des Produkts, Produkthersteller, Kunde des Produkts, Lebenslauf des Produkts. Zumindest einen Teil der Daten kann an den Server und/oder der Anzeigeneinrichtung übertragen werden.

Vorzugsweise kann die Erfassungseinrichtung zum Übertragen des ausgelesenen Datenparameters und/oder der Anzahl von detektierten Produkten in dem Lagerplatz zusammen mit einer Lagerplatzkennung an den Server eingerichtet sein. Die Lagerplatzkennung ist insbesondere eine eindeutige Kennung des Lagerplatzes. Vorzugsweise kann in einem Lager jeder Lagerplatz mit einer eindeutigen Lagerplatzkennung versehen sein. Die Lagerplatzkennung kann aus einer (eindeutigen) Kennung einer Erfassungseinrichtung eines Lagers ableitbar sein oder identisch mit ihr sein. Indem der mindestens ein Datenparameter und/oder die Anzahl an Produkten eines Lagerplatzes zusammen mit der jeweiligen Lagerplatzkennung an den Server übertragen wird, können lagerplatzspezifische Abfragen durchgeführt werden. Typischerweise ist der Server zum Empfang und Weiterleitung der übertragenen Lagerbestanddaten - Datenparameter, Anzahl der Produkte in dem Lagerplatz und Lagerplatzkennung - konfiguriert. Mit anderen Worten kann beispielsweise mittels eines Arbeitsplatzrechners die Produktanzahl, die Produktart und/oder der Zustand der gelagerten Produkte in einem oder mehreren bestimmten Lagerplatz/plätzen abgerufen und angezeigt werden.

Darüber hinaus kann das Lagersystem eingerichtet sein, eine Fehleinlagerung, also die Einlagerung eines Produkts in einen nicht korrekten Lagerplatz, zu detektieren. Die Fehleinlagerung kann insbesondere angezeigt werden. Dies ermöglicht es, eine Fehleinlagerung zeitnah zu beseitigen. In einer bevorzugten Ausführungsform kann in einer Speichereinrichtung eine Lagerplatzkennung zusammen mit einer Produktkennung des in dem Lagerplatz gelagerten Produkts gespeichert sein. Beispielsweise kann der Server die Speichereinrichtung umfassen oder mit dieser verbindbar sein. Das Lagersystem kann eine Auswerteeinrichtung umfassen. Beispielsweise können der Server, ein mit dem Server verbindbarer Rechner und/oder mobiles Gerät die Auswerteeinrichtung umfassen. Die Auswerteeinrichtung kann zum Vergleichen der von der Erfassungseinrichtung empfangenen Produktkennung und/oder der empfangenen Lagerplatzkennung mit den in der Speichereinrichtung gespeicherten Produktkennungen und/oder Lagerplatzkennungen eingerichtet sein. Wenn das Vergleichsergebnis eine Abweichung zwischen den empfangenen Daten und den gespeicherten Daten umfasst, wird eine Fehleinlagerung detektiert. Die Auswerteeinrichtung kann dies an mindestens eine vorgebbare Recheneinrichtung - wie z. B. Server, Rechner, mobiles Gerät und / oder Erfassungseinrichtung(en) der entsprechenden Lagerplätze - melden. Auch kann das Lagersystem eingerichtet sein, um eine Anweisung zur Ausgabe eines Produkts aus einem Lagerplatz zu erteilen.

Gemäß einer weiteren Ausführungsform kann das Lager mindestens eine verschließbare Lagervorrichtung umfassen. Insbesondere kann eine Lagervorrichtung ein Verschlussmittel, z.B. einen Deckel, eine Tür, etc., umfassen, um die Lagervorrichtung zu verschließen. Das Verschlussmittel kann ein Verriegelungselement umfassen. Die Lagervorrichtung kann ein oder mehr Lagerplätze umfassen. Die verschließbare Lagervorrichtung kann ausgewählt sein aus der Gruppe umfassend Container, Schrank, Gitterbox, Kühlschrank und Heizschrank. Eine entsprechende Lagervorrichtung kann mit einer zuvor beschriebenen Erfassungseinrichtung ausgestattet sein. Eine Überwachung des Lagerbestands in der Lagervorrichtung ist ohne ein Öffnen der Lagervorrichtung möglich. Vorzugsweise kann eine verschließbare Lagervorrichtung mit einer oben beschriebenen Anzeigeneinrichtung versehen sein. Ferner kann bei einer bevorzugten Ausführungsform eine Aufweckeinheit mit dem Verschlussmittel derart gekoppelt sein, dass insbesondere aufgrund einer Bewegung des Verschlussmittels eine potentielle Änderung der Anzahl der Produkte des mindestens einen Lagerplatzes der Lagervorrichtung detektiert wird.

Des Weiteren kann bei einer weiteren Ausführungsform vorgesehen sein, dass die Erfassungseinrichtung zum Erfassen von mindestens einem Lagerplatzparameter eingerichtet ist. Der Lagerplatzparameter kann ausgewählt sein aus der Gruppe umfassend Lagerplatztemperatur, Lagerplatzfeuchtigkeit, Zustand eines Verschlussmittels (z.B. geöffnet oder geschlossen) und Lagerplatzluftdruck. Die erfassten Daten können von der Erfassungseinrichtung an eine weitere Einrichtung, wie eine Anzeigeneinrichtung, dem Server, etc. übertragen werden. In einfacher Weise kann eine Lagerplatzumgebung (fern) überwacht werden. Bei Feststellung einer Störung, wie eine Abweichung von einem vorgegebenen Grenzwert, kann Alarm ausgelöst und ggf. geeignete Maßnahmen zur Behebung der Störung vorgenommen oder zumindest angestoßen werden.

Die Merkmale der Verfahren, Vorrichtungen, Systeme und Computerprogramme sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das erfindungsgemäße Verfahren, das erfindungsgemäße System und das erfindungsgemäße Computerprogramm auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines Lagersystems gemäß der vorliegenden Erfindung,
- Fig. 2: eine schematischen Teilansicht eines weiteren Ausführungsbeispiels eines Lagersystems gemäß der vorliegenden Erfindung, und
- Fig. 3: ein Diagramm eines Ausführungsbeispiels eines Verfahrens gemäß der vorliegenden Erfindung.

Nachfolgend werden gleiche Bezugszeichen für gleiche Elemente verwendet.

Das Lagersystem 100 umfasst ein Lager 101. Das Lager 101 kann insbesondere ein Regallager, Hochregallager, Palettenlager, etc. sein. Das Lager 101 umfasst vorliegend ein Regal 102 mit vier Lagerplätzen 104.1 bis 104.4. Es versteht sich, dass das Lager 101 mehr als ein Regal und/oder das mindestens eine Regal eine andere Anzahl an Lagerplätzen aufweisen kann.

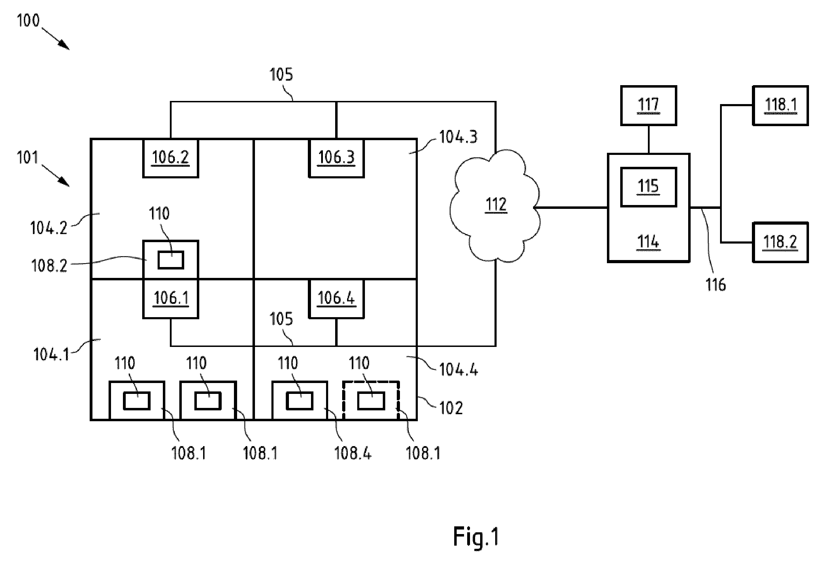

Insbesondere jeder Lagerplatz 104.1 bis 104.4 ist eingerichtet, mindestens ein Produkt 108.1 bis 108.4 aufzunehmen. Im vorliegenden Ausführungsbeispiel kann in einem ersten Lagerplatz 104.1 ein erstes Produkt 108.1 gelagert werden. Insbesondere sind in dem ersten Lagerplatz 104.1 zwei erste Produkte 108.1 derzeit gelagert. In einem zweiten Lagerplatz 104.2 ist vorliegend ein zweites Produkt 108.2 gelagert. Ferner ist der Figur 1 zu entnehmen, dass der dritte Lagerplatz 104.3 leer ist, während in dem vierten Lagerplatz 104.4 ein viertes Produkt 108.4 und ein erstes Produkt 108.1 gelagert ist.

Ferner umfasst jeder Lagerplatz 104.1 bis 104.4 eine Erfassungseinrichtung 106.1 bis 106.4. Insbesondere kann jedem Lagerplatz 104.1 bis 104.4 eine Erfassungseinrichtung 106.1 bis 106.4 eindeutig zugeordnet sein. Eine Erfassungseinrichtung 106.1 bis 106.4 ist eingerichtet, eine an oder in einem Produkt 108.1 bis 108.4 angeordnete Identifizierungskennung 110.1 bis 110.4 zumindest zu detektieren. Vorzugsweise kann eine Erfassungseinrichtung 106.1 bis 106.4 eingerichtet sein, weitere Produktdaten aus einer an oder in einem Produkt 108.1 bis 108.4 angeordneten Identifizierungskennung 110.1 bis 110.4 auszulesen. Beispielhafte und nicht abschließende Erfassungseinrichtungen sind Barcodeerfassungseinrichtungen, Kameras, RFID-Erfassungseinrichtungen, etc. Bei den Identifizierungskennungen 110.1 bis 110.4 kann es sich um entsprechende Identifizierungskennungen 110.1 bis 110.4 handeln, wie RFID-Transponder bzw. - Tags, Barcodes, oder sonstige durch eine Kamera auslesbare Codes.

Vorzugsweise kann es sich bei einer Identifizierungskennung 110.1 bis 110.4 insbesondere um eine passive Identifizierungskennung 110.1 bis 110.4 handeln. Beispielhaft kann es sich um einen passiven RFID-Transponder 110.1 bis 110.4 handeln, der über ein Abfragefeld der Erfassungseinrichtung 106.1 bis 106.4 mit Energie versorgt werden kann, um Daten an die auslesende Erfassungseinrichtung 106.1 bis 106.4 zu übertragen.

Die Erfassungseinrichtung 106.1 bis 106.4 ist zumindest dazu eingerichtet, die Anzahl von Produkten 108.1 bis 108.4 in einem jeweiligen Lagerplatz 104.1 bis 104.4 zu erfassen. Beispielhaft ist die erste Erfassungseinrichtung 106.1 zumindest eingerichtet, durch Detektion von mindestens zwei Identifizierungskennungen 110.1 zu erfassen, dass in dem ersten Lagerplatz zwei Produkte 108.1 derzeit gelagert sind. Das Abfragefeld einer RFID-Erfassungseinrichtung 106.1 bis 106.4 kann derart konfiguriert sein, dass nur die Identifizierungskennungen 110.1 bis 110.4 in dem zugehörigen Lagerplatz 104.1 bis 104.4 erfassbar sind.

Vorzugsweise kann die Erfassungseinrichtung 106.1 bis 106.4 eingerichtet sein, weitere Daten zu erfassen. Insbesondere kann vorgesehen sein, die Art des Produkts beispielsweise anhand einer Produktkennung bzw. Produkt-ID zu erfassen. Hierdurch kann beispielsweise detektiert werden, dass in dem ersten Lagerplatz 104.1 zwei erste Produkte 108.1 derzeit gelagert sind, während beispielsweise in dem vierten Lagerplatz 104.4 ein viertes Produkt 108.4 und ein weiteres Produkt 104.1, vorliegend ein erstes Produkt 104.1, gelagert sind.

Weitere beispielhafte Daten, die aus einer an oder in einem Produkt angebrachten Identifizierungskennung 110.1 bis 110.4 auslesbar sein können, sind Mengenangaben (z.B. x kg von y), Haltbarkeit des Produkts, Hersteller des Produkts, Kunde des Produkts, historischer Lebenslauf des Produkts z.B. bzgl. Transport des Produkts, wie Erschütterungen während des Transports, Qualität des Produkts, etc.

Eine Erfassungseinrichtung 106.1 bis 106.4 ist insbesondere eine aktive Erfassungseinrichtung 106.1 bis 106.4, die eine Energieversorgung benötigt. Als Energieversorgung kann insbesondere eine dauerhafte Energieversorgung vorgesehen sein. Beispielsweise kann ein Energieversorgungsnetzwerk umfassend Energieleitungen in dem Lagersystem installiert sein, um die Erfassungseinrichtungen 106.1 bis 106.4 mit elektrischer Energie zu versorgen. Vorzugsweise kann die Energieversorgung über ein (ohnehin vorgesehenes) Kommunikationsnetz 105 bereitgestellt werden. Beispielsweise kann Power over Ethernet (PoE) vorgesehen sein. Bei PoE werden netzwerkfähige Geräte, insbesondere die Erfassungseinrichtungen 106.1 bis 106.4, über das Ethernet-Kabel mit elektrischer Energie versorgt.

Bei einem Freilager kann als Energiequelle zudem eine Photovoltaik-Einrichtung und ggf. ein wiederaufladbarer Energiespeicher vorgesehen sein, mit der/dem insbesondere jede Erfassungseinrichtung 106.1 bis 106.4 ausgestattet sein kann. Alternativ oder zusätzlich kann eine Erfassungseinrichtung 106.1 bis 106.4 auch mit einer insbesondere leicht austauschbaren Batterie ausgestattet sein.

Insbesondere bei einer Batterie kann das System 100 weitere Maßnahmen umfassen, um den Energieverbrauch einer Erfassungseinrichtung 106.1 bis 106.4 zu verringern. So kann eine Erfassungseinrichtung 106.1 bis 106.4 nur zu bestimmten Zeitpunkten und/oder Ereignissen aktiviert werden. Vorzugsweise kann eine Erfassungseinrichtung 106.1 bis 106.4 mindestens eine (nicht gezeigte) Aufweckeinheit umfassen, also eine Aufweckeinheit in der Erfassungseinrichtung 106.1 bis 106.4 integriert und/oder mit dieser verbunden sein.

Die Aufweckeinheit kann beispielsweise ein Bewegungssensor sein, der bei Detektion einer Bewegung eine Aktivierung der Erfassungseinrichtung 106.1 bis 106.4 bewirkt. Insbesondere kann hierdurch eine Ein- oder Auslagerung von einem Produkt 108 detektiert werden. Eine Erfassungseinrichtung 106.1 bis 106.4 kann daher immer (nur) dann aktiviert werden, wenn zumindest eine potentielle Änderung des Lagerbestands des jeweiligen Lagerplatzes 104.1 bis 104.4 detektiert wird. Alternativ oder zusätzlich kann eine weitere Aufweckeinheit eingerichtet zum Aktivieren einer Erfassungseinrichtung 106.1 bis 106.4 abhängig von dem Empfang eines entsprechenden Befehlssignals bzw. Aufwecksignals vorgesehen sein.

Darüber hinaus kann alternativ oder zusätzlich vorgesehen sein kann, dass die Erfassungseinrichtung 106.1 bis 106.4 durch eine weitere Aufweckeinheit zeitgesteuert aktiviert werden kann, um den augenblicklichen Lagerbestand zu erfassen.

Wie bereits beschrieben wurde, kann ein erstes Kommunikationsnetz 105, vorliegend ein drahtgebundenes Kommunikationsnetz 105, vorgesehen sein. Über (nicht gezeigte) Router oder ähnliche Geräte können Daten über ein weiteres Kommunikationsnetz 112, wie ein drahtloses oder drahtgebundenes Kommunikationsnetz 112, mit mindestens einem zentralen Server 114 insbesondere bidirektional ausgetauscht werden. Der Server 114 ist vorliegend über ein weiteres Kommunikationsnetz 116 mit einer Mehrzahl von Arbeitsplatzrechner 118.1, 118.2 verbunden.

Der zentrale Server 114 ist eingerichtet, die von den Erfassungseinrichtungen 106.1 bis 106.4 empfangenen Daten auszuwerten und beispielsweise an einen Arbeitsplatzrechner 118.1, 118.2 zumindest teilweise weiterzuleiten.

Beispielhaft kann ein Benutzer mittels eines Arbeitsplatzrechners 118.1, 118.2 einen bestimmten Lagerbestand abrufen. Wenn beispielsweise der augenblickliche Lagerbestand des ersten Lagerplatzes 104.1 oder der aktuelle Lagerbestand des ersten Produkts 108.1 abgefragt wird, kann eine entsprechende Anfragenachricht an den Server 114 gesendet werden. Mittels einer Auswerteeinrichtung 115 und einer Speichereinrichtung 117 in Form einer Datenbank 117 kann anhand der Produktkennung des ersten Produkts 108.1 und/oder der Lagerplatzkennung die zugehörige erste Erfassungseinrichtung 106.1 bzw. dessen Kennung/Adresse bestimmt werden. Insbesondere können entsprechende Daten in der Datenbank 117 gespeichert werden.

Dann kann der Server 114 insbesondere ein Aufwecksignal generieren und an die erste Erfassungseinrichtung 106.1 senden. Das Aufwecksignal kann von einer Aufweckeinheit der ersten Erfassungseinrichtung 106.1 empfangen werden und (nur) eine Aktivierung der ersten Erfassungseinrichtung 106.1 bewirken. Nach der Aktivierung erfasst die Erfassungseinrichtung 106.1 die Anzahl an ersten Produkten 108.1 (vorliegend 2) und überträgt zumindest die die detektierte Anzahl an den ersten Server 114. Auf Aufforderung oder automatisch können weitere Produktdaten ausgelesen und übertragen werden. Anschließend kann die erste Erfassungseinrichtung 106.1 (ggf. nach einer Verzögerungszeit) in den Ruhemodus zurückgesetzt werden. Zumindest die empfangene Anzahl von ersten Produkten 108.1 kann von dem Server 114 dem anfragenden Arbeitsplatzrechner 118.1, 118.2 zur Verfügung gestellt werden.

Ferner ermöglicht das vorliegende Lagersystem 100 die Detektion von einer nicht korrekten Einlagerung eines Produktes. Beispielsweise kann die vierte Erfassungseinrichtung 104.4 an den Server 114 die Lagerkennung, z.B. die Kennung der vierten Erfassungseinrichtung 106.4, und die Anzahl an Produkten in dem vierten Lagerplatz 104.4 (vorliegend 1 erstes Produkt 108.1 und 1 viertes Produkt 108.4) übertragen. Die übertragenen Daten können von einer Auswerteeinrichtung 115 ausgewertet werden. Beispielsweise kann die Auswerteeinrichtung 115 die empfangenen Daten mit den in der Datenbank 117 gespeicherten Daten vergleichen. Vorliegend stellt die Auswerteeinrichtung 115 fest, dass das vierte Produkt 108.4 korrekt eingelagert ist, jedoch das erste Produkt 108.1 sich nicht in dem korrekten Lagerplatz 104.1 befindet. Ein entsprechendes Ergebnis kann beispielsweise an einen Arbeitsplatzrechner118.1, 118.2 übertragen werden. Zusätzlich kann der korrekte Lagerplatz 104.1 für das erste Produkt 108.1 angegeben werden.

Auch können leere Lagerplätze, wie der dritte Lagerplatz 104.3, automatisch detektiert und beispielsweise in automatisierter Weise ein Bestellvorgang für ein fehlendes Produkt initiiert werden.

Es versteht sich, dass nicht in jedem Lagerplatz eine Erfassungseinrichtung vorgesehen sein muss. Beispielsweise kann eine Erfassungseinrichtung für eine Mehrzahl von Lagerplätzen vorgesehen sein. Dies kann insbesondere dann der Fall sein, wenn in diesen Lagerplätzen das gleiche Produkt gelagert wird. Darüber hinaus kann es vorteilhaft sein, dass ein Lagerplatz mit zwei oder mehr Erfassungseinrichtungen ausgestattet ist. Dies ist immer dann von Vorteil, wenn aufgrund der Gestaltung, wie der Größe oder Form, eines Lagerplatzes und/oder der Art der Produkte zwei oder mehr Erfassungseinrichtungen vorzusehen sind, da eine Erfassungseinrichtung ggf. nicht sämtliche Bereiche eines Lagerplatzes und damit sämtliche Produkte in einem Lagerplatz erfassen kann. Beispielsweise kann an gegenüberliegenden Seiten eines Lagerplatzes jeweils eine Erfassungseinrichtung vorgesehen sein. Es versteht sich, dass diese über ein gemeinsames oder separate Kommunikationsmodul/e verfügen können.

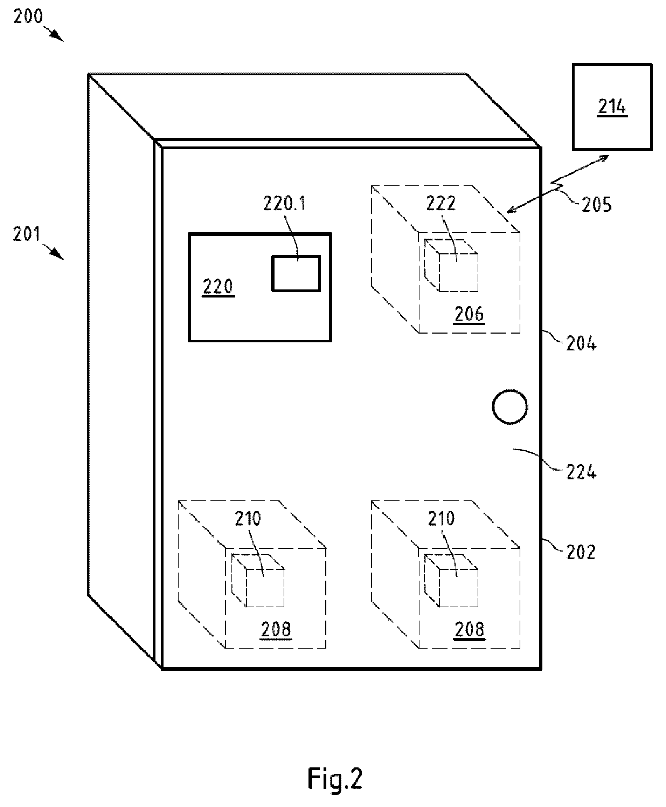

Die Figur 2 zeigt eine schematische Teilansicht eines weiteren Ausführungsbeispiels eines Lagersystems 200 gemäß der vorliegenden Erfindung. Das Lagersystem 200 umfasst ein Lager 201, welches (zu Gunsten einer besseren Übersicht) aus nur einer verschließbaren Lagervorrichtung 202 gebildet ist. Die verschließbare Lagervorrichtung 202 weist vorliegend einen Lagerplatz 204 auf. Es versteht sich, dass eine Vielzahl von verschließbaren Lagervorrichtungen vorgesehen sein kann und/oder die mindestens eine verschließbare Lagervorrichtung zwei oder mehr Lagerplätze umfassen kann.

Eine verschließbare bzw. öffnenbare Lagervorrichtung 202 weist vorliegend mindestens ein Verschlussmittel 224 auf, wie eine Tür, ein Deckel, eine Klappe, etc., welches geöffnet werden kann, um ein Produkt ein- oder auszulagern. Beispielhafte und nicht abschließende verschließbare Lagervorrichtungen 202 sind Container, Schränke, Gitterboxen, Kühlschränke und Heizschränke.

Vorliegend sind in dem Lagerplatz 204 der Lagervorrichtung 202 zwei Produkte 208 derzeit gelagert. Dies ist von außen jedoch aufgrund des Verschlussmittels 224, vorliegend eine Tür 224, nicht sichtbar (durch gestrichelte Linien veranschaulicht). Ferner ist innerhalb der Lagervorrichtung 202 eine Erfassungseinrichtung 206 angeordnet. In zuvor beschriebener Weise kann die Erfassungseinrichtung 206 zumindest eingerichtet sein, die Anzahl an Produkten 208 durch Detektieren der an oder in den Produkten angebrachten Identifikationskennungen 210 zu erfassen. Die Erfassungseinrichtung 206 kann vorliegend über einen drahtlosen Kommunikationskanal 205 Daten an einen zentralen Server 214 vorzugsweise bidirektional austauschen.

Darüber hinaus ist vorliegend eine Aufweckeinheit 222 dargestellt. Die Aufweckeinheit 222 kann insbesondere eingerichtet sein, ein Öffnen der Tür 224 zu detektieren. Bei Detektion eines Öffnens der Tür 224 aktiviert die Aufweckeinheit 222 die Erfassungseinrichtung 206. Insbesondere ist das Öffnen der Tür 224 ein Indiz dafür, dass eine Änderung des Lagerbestands durch eine Ein- oder Auslagerung zu erwarten ist.

Ferner kann außerhalb der Lagervorrichtung 202 eine Anzeigeneinrichtung 220 zum Beispiel in Form eines Bildschirms 220 angeordnet sein. Die Anzeigeneinrichtung 220 kann eingerichtet sein, einen Zustand der Lagervorrichtung 202 anzuzeigen, wie die Anzahl von derzeit eingelagerten Produkten 208 (kann zwischen 0 und einer maximal Zahl liegen), Produktart, Produktbezeichnung, etc. Insbesondere kann zumindest ein Teil der aus der Identifikationskennung 210 auslesbaren Daten über den Anzeigeneinrichtung 220 anzeigbar sein. Hierzu kann eine Kommunikationsverbindung zwischen Erfassungseinrichtung 206 und Anzeigeneinrichtung 220 vorgesehen sein. Ferner kann die Anzeigeneinrichtung 220 über ein Eingabemittel 220.1 verfügen. Zur Einsparung von elektrischer Energie kann sich die Anzeigeeinrichtung 220 in der Regel im Ruhemodus befinden. Durch Betätigen des Eingabemittels 220.1, wie eine Taste 220.1, kann die Anzeigeneinrichtung 220 und vorzugsweise auch die Erfassungseinrichtung 206 aktiviert werden, um z.B. den augenblicklichen Lagerbestand (ohne Öffnen der Lagervorrichtung 202) abzufragen. Hierdurch kann ein Qualitätsverlust aufgrund eines Öffnens der Tür 224, der beispielsweise eine Temperaturänderung und/oder Feuchtigkeitsveränderung in der Lagervorrichtung 202 verursachen könnte, vermieden werden.

Darüber hinaus kann die Erfassungseinrichtung 206 (oder eine zusätzliche Erfassungseinrichtung) eingerichtet sein, mindestens einen Lagerplatzparameter, wie die Temperatur in der Lagervorrichtung 202, die Feuchtigkeit in der Lagervorrichtung 202 und/oder dergleichen zu erfassen. In zuvor beschriebener Weise können entsprechende Daten an den Server 214 und/oder die Anzeigeneinrichtung 220 übertragen werden.

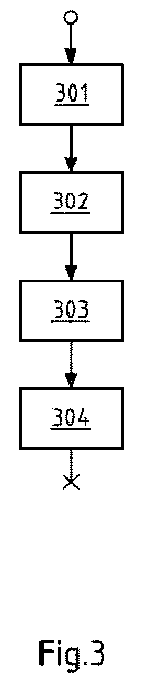

Nachfolgend wird ein mittels der Figur 3 die Funktionsweise beispielhaft beschrieben. Die Figur 3 zeigt ein Diagramm eines Ausführungsbeispiels eines Verfahrens gemäß der vorliegenden Erfindung.

In einem ersten Schritt 301 wird mindestens ein (insbesondere eine Vielzahl) mit (jeweils) mindestens einer Identifizierungskennung ausgestattetes Produkt bereitgestellt. Insbesondere können die Produkte in einem Lagerplatz oder einer Mehrzahl von Lagerplätzen eingelagert sein. In einem nächsten Schritt 302 kann zumindest die Anzahl von in mindestens einem Lagerplatz angeordneten Produkten erfasst werden, indem eine dem Lagerplatz zugeordnete Erfassungseinrichtung die mindestens eine Identifizierungskennung des mindestens einen Produkts in dem Lagerplatz detektiert. Anschließend kann in Schritt 303 die erfasste Anzahl von Produkten über ein Kommunikationsnetz an mindestens einen Server übertragen werden. Der Server kann in Schritt 304 die empfangene Anzahl der Produkte derart speichern, dass die Anzahl der Produkte abrufbar ist.

## Patentansprüche

1. Lagersystem (100, 200), umfassend:
- mindestens ein Lager (101, 201) eingerichtet zum Lagern von Produkten (108.1, 108.2, 108.3, 108.4, 208),
- wobei das Lager (101, 201) mindestens einen Lagerplatz (104.1, 104.2, 104.3, 104.4, 204) eingerichtet zum Lagern von mindestens einem Produkt (108.1, 108.2, 108.3, 108.4, 208) umfasst,
- mindestens eine dem Lagerplatz (104.1, 104.2, 104.3, 104.4, 204) zugeordnete Erfassungseinrichtung (106.1, 106.2, 106.3, 106.4,206),
- wobei die Erfassungseinrichtung (106.1, 106.2, 106.3, 106.4, 206) eingerichtet ist zum Erfassen der Anzahl von in dem Lagerplatz (104.1, 104.2, 104.3, 104.4, 204) angeordneten Produkten (108.1, 108.2, 108.3, 108.4, 208) durch Detektieren der Anzahl von an den Produkten (108.1, 108.2, 108.3, 108.4, 208) angeordneten Identifikationskennungen (110, 210) der in dem Lagerplatz (104.1, 104.2, 104.3, 104.4, 204) angeordneten Produkte (108.1, 108.2, 108.3, 108.4, 208),
- wobei die Erfassungseinrichtung (106.1, 106.2, 106.3, 106.4, 206) über mindestens ein Kommunikationsnetz (105, 112, 205) an mindestens einen Server (114, 214) verbunden ist, und eingerichtet ist, die erfasste Anzahl der Produkte (108.1, 108.2, 108.3, 108.4, 208) an mindestens einen der Server (114, 214)zu übertragen, und
- wobei der Server (114, 214) zum Empfang der Anzahl der Produkte (108.1, 108.2, 108.3, 108.4, 208) und zur ihrer Weiterleitung über mindestens ein Kommunikationsnetz (105, 112, 205) an einer oder mehrere Vorrichtungen zur Anzeige der empfangenen Anzahl der Produkte (108.1, 108.2, 108.3, 108.4, 208) eingerichtet ist.

2. Lagersystem (100, 200) nach Anspruch 1, **dadurch gekennzeichnet, dass**
- die Erfassungseinrichtung (106.1, 106.2, 106.3, 106.4, 206) ausgewählt ist aus der Gruppe umfassend Barcodeleser, RFID- oder Beacon-Lesegerät und Kamera, und/oder
- die Identifikationskennung (110, 210) ausgewählt ist aus der Gruppe umfassend Barcode, RFID-Transponder und Beacon,
mit der Maßnahme, dass die Identifikationskennung durch die Erfassungseinrichtung erfassbar ist.

3. Lagersystem (100, 200) nach Anspruch 1 oder 2, **dadurch gekennzeichnet, dass** die Identifizierungskennung (110, 210) eine passive Identifizierungskennung (110, 210) ist.

4. Lagersystem (100, 200) nach einem der vorherigen Ansprüche, **dadurch gekennzeichnet, dass** die Erfassungseinrichtung (106.1, 106.2, 106.3, 106.4, 206) eingerichtet ist, derart, dass ausschließlich die in dem der Erfassungseinrichtung (106.1, 106.2, 106.3, 106.4, 206) zugeordneten Lagerplatz (104.1, 104.2, 104.3, 104.4, 204) angeordneten Identifikationskennungen (110, 210) erfassbar sind.

5. Lagersystem (100, 200) nach einem der vorherigen Ansprüche, **dadurch gekennzeichnet, dass**
- der Lagerplatz (104.1, 104.2, 104.3, 104.4, 204) mindestens eine mit der Erfassungseinrichtung (106.1, 106.2, 106.3, 106.4, 206) über eine Kommunikationsverbindung verbindbare Anzeigeneinrichtung (220) umfasst, und
- die Anzeigeneinrichtung (220) zum Anzeigen der Anzahl der Produkte (108.1, 108.2, 108.3, 108.4, 208) in dem Lagerplatz (104.1, 104.2, 104.3, 104.4, 204) eingerichtet ist.

6. Lagersystem (100, 200) nach einem der vorherigen Ansprüche, **dadurch gekennzeichnet, dass** die Erfassungseinrichtung (106.1, 106.2, 106.3, 106.4, 206) zur Versorgung mit elektrischer Energie
- mit einem elektrischen Energieversorgungsnetz verbindbar ist, und/oder
- mit einem zur Energieübertragung konfigurierten Kommunikationsnetz (105) verbindbar ist, und/oder
- über mindestens einen Energiespeicher verfügt, und/oder
- mit einer Photovoltaikeinrichtung verbindbar ist.

7. Lagersystem (100, 200) nach einem der vorherigen Ansprüche, **dadurch gekennzeichnet, dass** die Erfassungseinrichtung (106.1, 106.2, 106.3, 106.4, 206) mindestens eine Aufweckeinheit (222) eingerichtet zum Aktivieren der Erfassungseinrichtung (106.1, 106.2, 106.3, 106.4, 206) umfasst.

8. Lagersystem (100, 200) nach Anspruch 7, **dadurch gekennzeichnet, dass**
- die Aufweckeinheit (222) zum Aktivieren der Erfassungseinrichtung (106.1, 106.2, 106.3, 106.4, 206) abhängig von einem Empfang eines Aufwecksignals von dem zentralen Server (114, 214) und/oder von der Anzeigeneinrichtung (220) eingerichtet ist,
und/oder
- die Aufweckeinheit (222) zum Detektieren von zumindest einer potentiellen Änderung der Anzahl der Produkte des Lagerplatzes (104.1, 104.2, 104.3, 104.4, 204) eingerichtet ist, und
- die Aufweckeinheit (222) zum Aktivieren der Erfassungseinrichtung (106.1, 106.2, 106.3, 106.4, 206) bei Detektion einer potentiellen Änderung eingerichtet ist, und/oder
- die Aufweckeinheit (222) zum zeitgesteuerten Aktivieren der Erfassungseinrichtung (106.1, 106.2, 106.3, 106.4, 206) eingerichtet ist.

9. Lagersystem (100, 200) nach einem der vorherigen Patentansprüche, **dadurch gekennzeichnet, dass**
- die Erfassungseinrichtung (106.1, 106.2, 106.3, 106.4, 206) zum Auslesen von mindestens einem Datenparameter des Produkts (108.1, 108.2, 108.3, 108.4, 208) eingerichtet ist, und
- der Datenparameter ausgewählt ist aus der Gruppe umfassend Produktkennung, Produktbezeichnung, Produktmenge, Haltbarkeit des Produkts (108.1, 108.2, 108.3, 108.4, 208), Produkthersteller, Kunde des Produkts, Lebenslauf des Produkts (108.1, 108.2, 108.3, 108.4, 208).

10. Lagersystem (100, 200) nach Anspruch 9, **dadurch gekennzeichnet, dass** die Erfassungseinrichtung (106.1, 106.2, 106.3, 106.4, 206) zum Übertragen des ausgelesenen Datenparameter zusammen mit einer Lagerplatzkennung an den zentralen Server (114, 214) eingerichtet ist.

11. Lagersystem (100, 200) nach Anspruch 9 oder 10, **dadurch gekennzeichnet, dass**
- in einer Speichereinrichtung (117) eine Lagerplatzkennung zusammen mit einer Produktkennung des in dem Lagerplatz (104.1, 104.2, 104.3, 104.4, 204) gelagerten Produkts (108.1, 108.2, 108.3, 108.4, 208) gespeichert ist,
- das Lagersystem (100, 200) eine Auswerteeinrichtung (115) umfasst, und
- die Auswerteeinrichtung (115) zum Vergleichen der von der Erfassungseinrichtung (106.1, 106.2, 106.3, 106.4, 206) empfangene Produktkennung und/oder der empfangenen Lagerplatzkennung mit den in der Speichereinrichtung (117) gespeicherten Produktkennungen und/oder Lagerplatzkennungen eingerichtet ist.

12. Lagersystem (100, 200) nach einem der vorherigen Ansprüche, **dadurch gekennzeichnet, dass**
- das Lager (101, 201) mindestens eine verschließbare Lagervorrichtung (202) umfasst, und
- die verschließbare Lagervorrichtung (202) ausgewählt ist aus der Gruppe umfassend Container, Schrank, Gitterbox, Kühlschrank und Heizschrank.

13. Lagersystem (100, 200) nach einem der vorherigen Ansprüche, **dadurch gekennzeichnet, dass**
- die Erfassungseinrichtung (106.1, 106.2, 106.3, 106.4, 206) zum Erfassen von mindestens einem Lagerplatzparameter eingerichtet ist, und
- der Lagerplatzparameter ausgewählt ist aus der Gruppe umfassend Lagerplatztemperatur, Lagerplatzfeuchtigkeit, Zustand eines Verschlussmittels und Lagerplatzluftdruck.

14. Verfahren zum Betreiben von mindestens einem Lagersystem (100, 200), insbesondere einem Lagersystem (100, 200) gemäß einem der vorherigen Ansprüche, umfassend:
- Bereitstellen von mindestens einem mit mindestens einer Identifizierungskennung (110, 210) ausgestatteten Produkt (108.1, 108.2, 108.3, 108.4, 208),
- Erfassen der Anzahl von in mindestens einem Lagerplatz (104.1, 104.2, 104.3, 104.4, 204) angeordneten Produkten (108.1, 108.2, 108.3, 108.4, 208), indem eine dem Lagerplatz (104.1, 104.2, 104.3, 104.4, 204) zugeordnete Erfassungseinrichtung (106.1, 106.2, 106.3, 106.4, 206) die mindestens eine Identifizierungskennung (110, 210) des mindestens einen Produkts (108.1, 108.2, 108.3, 108.4, 208) in dem Lagerplatz (104.1, 104.2, 104.3, 104.4, 204) detektiert,
- Übertragen der erfassten Anzahl von Produkten (108.1, 108.2, 108.3, 108.4, 208) über mindestens ein Kommunikationsnetz (105, 112, 205) an mindestens einen zentralen Server (114, 214), und
- Weiterleitung der empfangenen Anzahl der Produkte (108.1, 108.2, 108.3, 108.4, 208), über mindestens ein Kommunikationsnetz (105, 112, 205) an einer oder mehrere Vorrichtungen zur Anzeige der empfangenen Anzahl der Produkte (108.1, 108.2, 108.3, 108.4, 208).

15. Computerprogramm mit Instruktionen ausführbar auf einem Prozessor derart, dass ein Lagersystem (100, 200) gemäß dem Verfahren nach Anspruch 14 betrieben wird.
